# EUROPEAN PATENT SPECIFICATION

(11) **EP 0 531 055 B1**
(45) Date of publication and mention of the grant of the patent: **27.11.1996**
(21) Application number: 92307837.2
(22) Date of filing: 28.08.1992
(51) Int. Cl.: F16L 55/04, B29C 53/60, F16L 9/16, F16L 55/033

(54) **Thrust tube capable of sufficiently damping a vibration**
Schubrohr mit ausreichender Vibrationsreduzierung
Tube de poussée capable d'un amortissement suffisant des vibrations

(30) Priority: 31.08.1991 JP 246944/91
(43) Date of publication of application: 10.03.1993
(73) Proprietor: NEC CORPORATION, Tokyo (JP)
(72) Inventor: Tamura, Tetuya, c/o NEC Corporation, Tokyo (JP); Hoshino, Teruomi, c/o NEC Corporation, Tokyo (JP)
(74) Representative: Orchard, Oliver John

(56) References cited:
- PATENT ABSTRACTS OF JAPAN vol. 015, no. 404 (M-1168) 15 October 1991 & JP-A-03 166 921 (NEC CORP;OTHERS: 01) 18 July 1991
- PATENT ABSTRACTS OF JAPAN vol. 014, no. 552 (M-1056) 7 December 1990 & JP-A-02 236 014 (SUMITOMO METAL IND LTD) 18 September 1990
- PATENT ABSTRACTS OF JAPAN vol. 013, no. 327 (M-854) 24 July 1989 & JP-A-01 108 409 (YOKOHAMA RUBBER CO LTD:THE;OTHERS: 01) 25 April 1989
- PATENT ABSTRACTS OF JAPAN vol. 012, no. 478 (M-775) 14 December 1988 & JP-A-63 199 915 (MITSUBISHI ELECTRIC CORP) 18 August 1988

## Description

This invention relates to a thrust tube which is capable of damping a vibration of a mechanical member or a machine. herein, it is to be noted throughout the instant specification that description will be made about a thrust tube which is used for a spacecraft, such as an artificial satellite, although this invention is never restricted to such a thrust tube but is applicable to any other thrust tubes used for an office automation machine, an automobile, and a leisure good.

A conventional thrust tube of the type described is made of either an alloy, such as an aluminum alloy and a magnesium alloy, or a carbonfiber reinforced composite material. Such a thrust tube is described by N. Barberis in J. Spacecraft Vol. 21, No. 1, JAN-FEB. 1984, (pages 55 to 60) under the title of "Design and Development of the INTELSAT V Graphite-Epoxy Central Thrust Tube".

In such a thrust tube, it is often required that the thrust tube can damp a vibration transmitted through a structural member to which the thrust tube is attached.

However, it has been confirmed that the conventional thrust tube of an alloy or a carbonfiber reinforced composite material can not sufficiently damp the vibration. In other words, it is very difficult to improve a damping characteristic of the thrust tube itself.

Taking the above into consideration, when a vibration should be damped on the spacecraft which comprises mechanical elements mechanically coupled to the thrust tube, a damping material must be adhered to each of the mechanical elements. Such adhesion of the damping material to each mechanical element makes the spacecraft itself unpleasingly heavy.

It is an object of this invention to provide a thrust tube which has a good vibration-damping characteristic.

It is another object of this invention to provide a thrust tube of the type described, which is light in weight and is therefore suitable for a spacecraft.

JP-A-3166921, the closest state of the art, discloses a thrust tube having a tubular multilayer shell which comprises a lamina formed by a composite material ply composed of a matrix resin and a carbonfiber reinforced material and a vibration-damping ply stacked on said composite material ply, and proposes a plurality of plies. This publication proposes the pre-characterizing portions of claims 1 and 9. The invention itself provides the alternatives defined in claim 1 or 9.

According to an embodiment of this invention, a thrust tube has a tubular multilayer shell which comprises a lamina formed by composite material ply composed of a matrix resin and a carbonfiber reinforced material and a vibration damping ply stacked on the composite material ply. The lamina may be formed by a plurality of composite material plies each of which is composed of a matrix resin and a carbon reinforced material and a plurality of vibration-damping plies each of which intervenes between two adjacent ones of the composite material plies.

### Brief Description of the Drawing:

Fig. 1 is a partial sectional view showing a thrust tube according to an embodiment of the present invention;
Fig. 2 is an explanatory view showing the thrust tube manufactured in accordance with a manufacturing method for the embodiment illustrated in Fig. 1;
Fig. 3 is an explanatory view showing a stacking sequence structure of the thrust tube;
Fig. 4 is an explanatory view showing a vibration-damping characteristic of the thrust tube manufactured in the embodiment; and
Fig. 5 is an explanatory view showing a vibration-damping characteristic of the thrust tube having no vibration-damping ply.

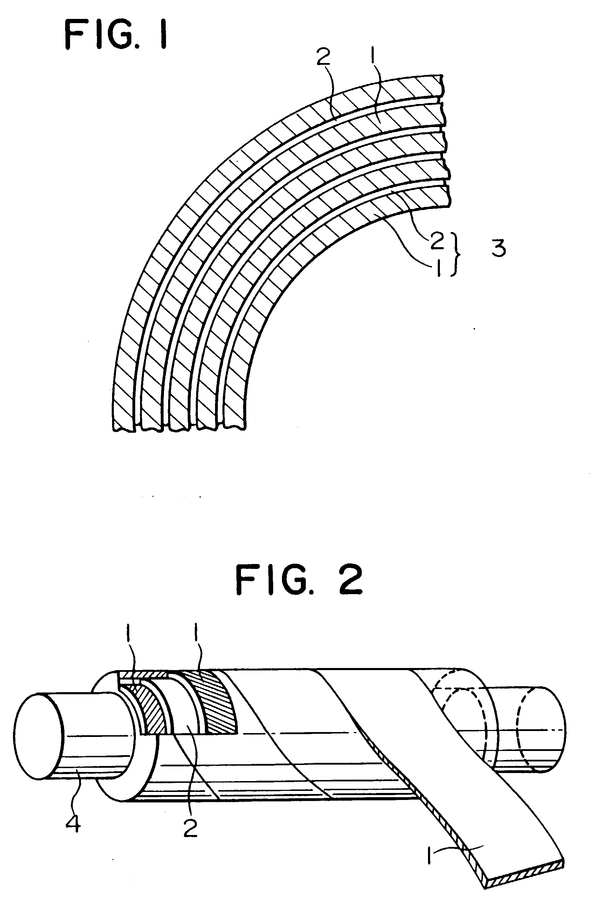

Description will be made below regarding to an embodiment of the present invention with reference to Figs. 1 through 5. The illustrated thrust tube has a tubular multilayer wall or shell 3 which is partially illustrated in Fig. 1 and which is collectively referred to as a lamina. The tubular multilayer shell may be also called a circular cylindrical shell and comprises a plurality of composite material plies or layers 1 and a plurality of vibration-damping plies or layers 2 each of which interleaves between two adjacent ones of the composite material plies 1, as shown in Fig. 1.

The composite material plies 1 and the vibration-damping plies 2 are stacked one another one by one in a manner to be described later in detail. Thus, the circular cylindrical shell 3 of a stacking sequence structure is formed with a hollow space defined therein.

In Fig. 2, description is directed to a method of manufacturing the thrust tube illustrated in Fig. 1. In order to form each of the composite material plies 1, a high-elastic modulus carbonfiber sheet is at first prepared which includes fibers oriented in a predetermined direction or a unidirection and which is impregnated with a matrix resin. Such a sheet may be referred to as a pre-preg sheet. In the illustrated example, Torayca M46/#2500 which is manufactured and sold by Toray Industries, Inc. in Tokyo is used as the pre-preg sheet and includes unidirectionally oriented fibers impregnated with the matrix resin. TORAYCA is a registered trade mark.Specifically, the above-mentioned pre-preg sheet includes carbonfibers of PAN (polyacrylonitrile) as a reinforcement and the matrix resin formed by a semi-cured epoxy resin of bisphenol A. Thereafter, the pre-preg sheet is severed or cut in a cut direction into a plurality of pre-preg tapes so that the fibers of the tapes have a plurality of different orientation angles. herein, the fibers of the pre-preg tapes have the orientation angles of 45, 60, and 90 degrees relative to the cut direction. Thus, three kinds of the pre-preg tapes are prepared in this example.

A vibration-damping sheet is also prepared by filling polyethylene glycol as a flexibilizer in an epoxy resin. This resin is adjusted so as to be cured or hardened at a temperature around 135 °C, which is the cure temperature of the epoxy resin included in the pre-preg sheet of the composite material. As for such constrained type vibrational damping resin material, it is preferable to use a material having an elastic modulus of not higher than 10 kgf/mm², more preferably not higher than 1 kgf/mm², and mechanical loss tanδ of not less than 0.1 more preferably not less than 0.5.

The vibration-damping sheet is also cut into a plurality of vibration-damping tapes.

In addition, a cylindrical mandrel 4 (Fig. 2) is prepared which has a predetermined diameter and a mandrel axis extended between a righthand side and a lefthand side of Fig. 2. The cylindrical mandrel 4 defines a hollow space of the thrust tube while the mandrel axis provides a tube axis when the thrust tube is removed from the cylindrical mandrel 4.

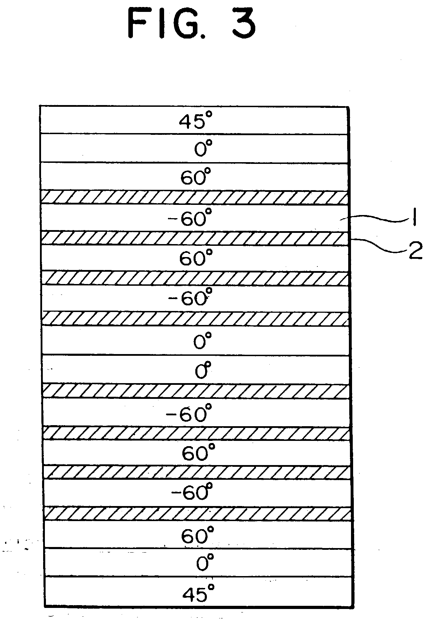

Referring to Fig. 3 together with Fig. 2, the illustrated stacking sequence structure or the circular cylindrical shell 3 is composed of fourteen composite material plies 1 and eight vibration-damping plies 2, as shown in Fig. 3. In Fig. 3, it is assumed that the composite material plies 1 and the vibration-damping plies 2 are successively stacked one by one from the lowest one of the plies of Fig. 3 to the uppermost one of the plies.

In the illustrated example, the lowest and the uppermost plies are specified by the composite material plies 1. In Fig. 3, the orientation angles, such as 0, 45, 60, -45, and -60 degrees, are shown in each of the composite material plies 1 and may be considered as orientation angles between the fibers and the mandrel axis. This shows that the orientation angle of 0 degree is parallel to the mandrel axis while the orientation angle of 45 degrees are oblique by 45 degrees to the mandrel axis.

In Figs. 2 and 3, each of the pre-preg tapes is wound around the mandrel 4 after selection of the pre-preg tapes so that each pre-preg tape is helically wound around the mandrel axis at a predetermined winding angle different from a right angle. As a result, each composite material ply 1 is formed by winding each pre-preg tape which has a selected orientation angle. From this fact, it is apparent that each composite material ply 1 has the orientation angle determined by that of each pre-preg tape, as illustrated in Figs. 2 and 3. In Fig. 3, three of the pre-preg tapes which have the orientation angles of 45, 0, and 60 degrees are successively wound from the lowest composite material ply.

Subsequently, the vibration-damping tape is also wound around the composite material ply 1. In this event, the vibration-damping tape is wider than the composite material tape, as illustrated in Fig. 2 and may be inclined relative to the mandrel axis. This shows that a winding angle of the vibration-damping tape may not be perpendicular to the mandrel axis. Similar winding operations are successively carried out to form the laminated structure illustrated in Fig. 3. Thus, each vibration-damping film ply 2 is sandwiched between plies as shown in Figs. 2 and 3 and interleaves between two adjacent ones of the composite material plies 1.

After such a laminated structure is obtained by the above-mentioned procedure, the laminated structure is subjected to a hardening or curing process to mold or unify the composite material plies 1 and the vibration-damping plies 2 into a unified structure and is removed from the mandrel 4. Such molding is carried out by the use of an autoclave which is kept at a temperature of 135 °C under a pressure of 4.0 kgf/cm². Thus, the thrust tube is manufactured in the form of the circular cylindrical shell.

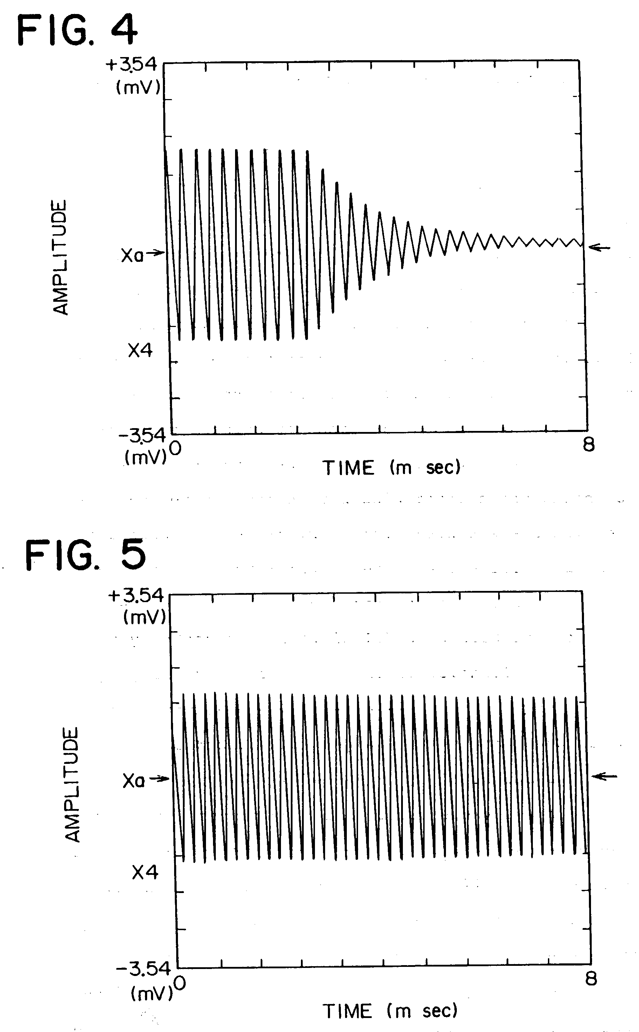

Fig. 4 shows a vibration-damping characteristic of the thrust tube made in accordance with the embodiment. While Fig. 5 shows a similar characteristic of a thrust tube which comprises no vibration-damping ply. For comparison, the vibration-damping characteristic of a carbonfiber reinforced plastic (CFRP) thrust tube is shown in Fig. 5 and compared with that illustrated in Fig. 4. As is apparent from Figs. 4 and 5, the thrust tube according to this invention exhibits reduced vibration-damping time and a remarkably improved vibration-damping characteristic, as illustrated in Fig. 4.

As mentioned above, according to the present invention, it is possible to realize a thrust tube which has an excellent vibration-damping characteristic and which can effectively damp the vibration generated on the structural members which are connected to and held by the thrust tube. This makes it possible to lighten the spacecraft. In addition, such a thrust tube is applicable to an antenna and a solar paddle both of which require excellent vibration-damping properties.

A thrust tube according to the present invention is formed by a circular cylindrical shell composed of the composite material plies and vibration-damping plies. The vibration-damping plies sandwiched between the composite material plies absorbs vibration energy attributed to its bending deformation or shear deformation of a viscoelastic plies caused by the expansion deformation. Accordingly, it has an excellent vibration-damping characteristic.

While the present invention has thus far been described in connection with only a few embodiments thereof, it will readily be possible for those skilled in the art to put this invention into practice in various other manners. For example, suitable resins for impregnation to the reinforced fiber may be a thermoplastic resin, such as an epoxy resin, in combination with polyfunctional epoxy resin, such as bisphenol A, and curing agent, addition polyimide, condensation polyimide, and polyether ether ketone (PEEK). As the vibration-damping film ply, an uncured material can be used with addition of the flexibilizer such as the polyethylene glycol, the polypropylene glycol, and the liquid rubber. The thrust tube may be formed by a combination of a single composite material ply and a single vibration-damping ply.

## Claims

1. A thrust tube having a tubular multilayer shell (3) which comprises a lamina formed by:
a composite material ply (1) composed of a matrix resin and a carbonfiber reinforced material; and
a vibration-damping ply (2) stacked on said composite material ply, characterized in that the vibration damping ply is formed by epoxy resin uncured, semi-cured or cured to 135°C including a flexibilizer.

2. A thrust tube as claimed in claim 1, wherein said tubular multilayer shell (3) further comprises an additional lamina which is stacked on said lamina and which is formed by:
an additional composite material ply composed of a matrix resin and a carbonfiber reinforced material; and
an additional vibration-damping ply stacked on said composite material ply.

3. A thrust tube as claimed in claim 1 or 2 wherein said tubular multilayer shell (3) surrounds a hollow space therein and a tube axis extended through said hollow space, wherein some of said plurality of the composite material plies (1) have windings, around said tube axis, of tapes having different predetermined fiber orientation angles relative to said tube axis.

4. A thrust tube as claimed in claim 1 or 2, wherein two adjacent ones of said composite material plies have windings of tapes so composed that a selected one of the two adjacent ones of the composite material plies (1) has one preselected orientation angle relative to said tube axis while the remaining one of the two adjacent ones of the composite material plies has another orientation angle different from said one preselected orientation angle.

5. A thrust tube as claimed in any of claims 1-4, wherein each of said composite material plies (1) is formed by a pre-preg sheet of the carbonfiber reinforced material impregnated with said matrix resin.

6. A thrust tube as claimed in claim 5, wherein said matrix resin is a synthetic resin being either or both of a thermoplastic resin, and/or an epoxy resin comprising a combination of a polyfunctional resin and a hardener.

7. A thrust tube as claimed in claim 6, wherein said epoxy resin is a bisphenol A while said thermoplastic resin is selected from a group consisting of addition polyimid of a curing type, condensation polyimid, and polyether ether ketone.

8. A thrust tube as claimed in any of claims 1-7, wherein said flexibilizer consists of a polyethylene glycol, and/or polypropylene glycol, and/or liquid rubber.

9. A method of manufacturing the thrust tube claimed in any of claims 1 to 8, comprising stacked plies (1) of matrix resin and carbon fiber reinforced material, and intervening plies (2) of vibration damping material; comprising the steps of:
preparing a mandrel (4) which has an axis;
winding a carbonfiber reinforced tape (1) impregnated with a matrix resin around said mandrel to form a carbonfiber reinforced composite material ply (1);
characterized by the steps of:
covering a vibration-damping tape formed by uncured or semi-cured epoxy resin and including a flexibilizer therein on said carbonfiber reinforced composite material ply (1) to form a vibration-damping ply (2);
alternatively repeating the carbonfiber reinforced tape winding step and the vibration-damping tape covering step to form a multilayer composed of a plurality of the carbonfiber reinforced composite material plies and a plurality of the vibration-damping plies;
pressing and heating said multilayer to obtain a hardened multilayer; and
removing said hardened multilayer from said mandrel to form said thrust tube.

10. A method as claimed in claim 9, characterized by:
forming two adjacent ones of said composite material plies by winding said tape so that a selected one of the two adjacent ones of the composite material plies has one selected said predetermined fiber orientation angle relative to said tube axis while the remaining one of the two adjacent ones of the composite material plies has another selected said predetermined fiber orientation angle different from the one selected predetermined fiber orientation angle.

11. A method as claimed in claim 9 or 10, characterized by the step of:
forming each of said composite material plies by a pre-preg sheet of the carbonfiber reinforced material impregnated with said matrix resin.

12. A method as claimed in claim 9, 10 or 11, characterized in that:
said matrix resin is a synthetic resin being either or both of a thermoplastic resin, and/or an epoxy resin comprising a combination of a polyfunctional resin and a hardener.

13. A method as claimed in any of claims 9-12 characterized in that the vibration damping ply (2) is formed by epoxy resin uncured, semi-cured or cured to 135°C including a flexibilizer.

## Patentansprüche

1. Schubrohr mit einer rohrförmigen mehrlagigen Hülle (3), welche eine Laminat aufweist, das gebildet wird von:
einer Verbundmateriallage(1), die aus einem Matrixharz und einem Kohlefaser-verstärkten Material besteht; und
einer auf die Verbundmateriallage geschichteten Vibrationsdämpfungslage (2), dadurch gekennzeichnet, daß die Vibrationsdämpfungslage aus einem ungehärteten, halb-gehärteten oder bei 135°C gehärteten einen Flexibilisierer enthaltenden Epoxyharz besteht.

2. Schubrohr nach Anspruch 1, wobei die rohrförmige mehrlagige Hülle (3) ferner ein zusätzliches Laminat aufweist, welches auf das Laminat geschichtet ist und welches gebildet wird durch:
eine zusätzliche Verbundmateriallage(1), die aus einem Matrixharz und einem Kohlefaser-verstärkten Material besteht; und
einer zusätzlichen auf die Verbundmateriallage geschichteten Vibrationsdämpfungslage.

3. Schubrohr nach Anspruch 1 oder 2, wobei die rohrförmige mehrlagige Hülle (3) einen Hohlraum darin umgibt und sich eine Rohrachse durch den Hohlraum erstreckt, wobei einige der mehreren Verbundmateriallagen (1) Wicklungen um die Rohrachse herum aus Bändern mit verschiedenen vorgegebenen Faserausrichtungswinkeln bezogen auf die Rohrachse aufweisen.

4. Schubrohr nach Anspruch 1 oder 2, wobei zwei benachbarte von den Verbundmateriallagen Wicklungen von Bändern aufweisen, die so zusammengesetzt sind, daß eine vorgewählte von den zwei benachbarten Verbundmateriallagen (1) einen vorgewählten Ausrichtungswinkel bezogen auf die Rohrachse aufweist, während die restliche von den zwei benachbarten Verbundmaterial lagen einen anderen von dem vorgewählten Ausrichtungswinkel unterschiedlichen Ausrichtungswinkel aufweist.

5. Schubrohr nach einem der Ansprüche 1 bis 4, wobei jede Verbundmateriallage (1) aus einer vorimprägnierten Schicht des mit dem Matrixharz imprägnierten Kohlefaser-verstärkten Materials besteht.

6. Schubrohr nach Anspruch 5, wobei das Matrixharz ein synthetisches Harz ist, das entweder ein thermoplastisches Harz und/oder ein Epoxyharz oder beides ist, das eine Kombination eines polyfunktionalen Harzes und einen Härter aufweist.

7. Schubrohr nach Anspruch 6, wobei das Epoxyharz ein Bisphenol A ist, während das thermoplastische Harz aus einer Gruppe gewählt wird, die aus einem härtenden Additionspolyimid, Kondensationspolyimid und Polyetheretherketon besteht.

8. Schubrohr nach einem der Ansprüche 1 bis 7, wobei der Flexibilisierer aus einem Polyethylenglykol und/oder Polypropylenglykol und/oder Flüssiggummi besteht.

9. Verfahren zum Herstellen eins Schubrohrs nach einem der Ansprüche 1 bis 8, das geschichtete Lagen (1) aus Matrixharz, und aus Kohlefaser-verstärkten Material und dazwischen geschichtete Lagen (2) eines vibrationsdämpfenden Materials aufweist, mit den Schritten:
Verarbeiten eines eine Achse aufweisenden Dorns (4);
Wickeln eines mit einem Matrixharz imprägnierten Kohlefaser-verstärkten Bandes (1) um den Dorn, um eine Kohlefaser-verstärkte Verbundmateriallage (1) zu erzeugen;
gekennzeichnet durch die Schritte:
Aufbringen eines aus ungehärteten oder halb-gehärteten Epoxyharz hergestellten und einen Flexibilisierer darin enthaltenden vibrationsdämpfenden Bandes auf die Kohlefaser-verstärkte Verbundmateriallage (1), um eine Vibrationsdämpfungslage (2) zu erzeugen;
abwechselndes Wiederholen des Wicklungsschritts des Kohlefaser-verstärkten Bandes und des Aufbringschrittes des vibrationsdämpfenden Bandes, um eine aus mehreren Kohlefaser-verstärkten Verbundmateriallagen und mehreren Vibrationsdämpfungslagen zusammengesetzte Mehrlagenschicht zu erzeugen;
Pressen und Erhitzen der Mehrlagenschicht, um eine gehärtete Mehrlagenschicht zu erhalten; und
Entfernen der gehärteten Mehrlagenschicht von dem Dorn, um das Schubrohr herzustellen.

10. Verfahren nach Anspruch 9, gekennzeichnet durch:
Erzeugen zweier benachbarter Verbundmateriallagen, indem das Band so gewickelt wird, daß eine gewählte von den zwei benachbarten Verbundmateriallagen einen gewählten Faserausrichtungswinkel bezogen auf die Rohrachse aufweist, während die restliche von den zwei benachbarten Verbundmateriallagen einen anderen gewählten Faserausrichtungswinkel besitzt, der sich von dem einem gewählten vorgegebenen Faserausrichtungswinkel unterscheidet.

11. Verfahren nach Anspruch 9 oder 10, gekennzeichnet durch den Schritt:
Herstellen jeder Verbundmateriallage aus einer vorimprägnierten Schicht des mit dem Matrixharz imprägnierten Kohlefaser-verstärkten Materials.

12. Verfahren nach Anspruch 9, 10 oder 11, dadurch gekennzeichnet, daß:
das Matrixharz ein synthetisches Harz ist, das entweder ein thermoplastisches Harz und/oder ein Epoxyharz, das eine Kombination eines polyfunktionalen Harzes und einen Härter aufweist, oder beides ist.

13. Verfahren nach einem der Ansprüche 9 bis 12, dadurch gekennzeichnet, daß die Vibrationsdämpfungslage (2) aus einem einen Flexibilisierer enthaltenden bei 135°C ungehärteten, halb-gehärteten oder gehärteten Epoxyharz hergestellt wird.

## Revendications

1. Tube de poussée ayant une enveloppe tubulaire à multiples couches (3) qui comprend une feuille formée par :
une couche de matière composite (1) composée d'une résine à phase dispersée et d'une matière renforcée en fibres de carbone ; et
une couche d'amortissement des vibrations (2) empilée sur ladite couche en matière composite, caractérisée en ce que la couche d'amortissement des vibrations est formée par une résine époxy non cuite, mi-cuite ou cuite à 135 °C en incluant un agent assouplissant.

2. Tube de poussée selon la revendication 1, dans lequel ladite enveloppe tubulaire à couches multiples (3) comprend, de plus, une feuille supplémentaire qui est empilée sur ladite feuille et qui est formée par :
une couche de matière composite supplémentaire composée d'une résine à phase dispersée et d'une matière renforcée en fibres de carbone ; et
une couche d'amortissement des vibrations supplémentaire empilée sur ladite couche de matière composite.

3. Tube de poussée selon la revendication 1 ou 2, dans lequel ladite enveloppe tubulaire à couches multiples (3) entoure un espace creux en son sein et un axe de tube étendu à travers ledit espace creux, dans lequel certaines couches de ladite pluralité des couches en matière composite (1) ont des enroulements, autour dudit axe de tube, de bandes ayant différents angles prédéterminés d'orientation de fibre par rapport audit axe de tube.

4. Tube de poussée selon la revendication 1 ou 2, dans lequel deux couches adjacentes desdites couches de matière composite ont des enroulements de bandes composés de sorte qu'une couche sélectionnée des deux couches adjacentes des couches en matière composite (1) ait un angle d'orientation présélectionné particulier par rapport audit axe de tube tandis que la couche restante des deux couches adjacentes des couches en matière composite a un autre angle d'orientation différent dudit angle d'orientation présélectionné particulier.

5. Tube de poussée selon l'une quelconque des revendications 1 à 4, dans lequel chacune desdites couches en matière composite (1) est formée par une feuille préimprégnée de la matière renforcée en fibres de carbone imprégnée avec ladite résine à phase dispersée.

6. Tube de poussée selon la revendication 5, dans lequel ladite résine à phase dispersée est une résine synthétique étant soit une résine thermoplastique et/ou une résine époxy ou les deux, comprenant une combinaison d'une résine polyvalente et d'un durcisseur.

7. Tube de poussée selon la revendication 6, dans lequel ladite résine époxy est un bisphénol A tandis que ladite résine thermoplastique est sélectionnée à partir d'un groupe constitué d'un polyimide d'addition du type à cuisson, d'un polyimide de condensation, et d'une cétone de polyéther et d'éther.

8. Tube de poussée selon l'une quelconque des revendications 1 à 7, dans lequel ledit agent assouplissant est constitué d'un polyéthylène-glycol, et/ou d'un polypropylène-glycol, et/ou d'un caoutchouc liquide.

9. Procédé de fabrication du tube de poussée selon l'une quelconque des revendications 1 à 8, comprenant des couches empilées (1) de résine à phase dispersée et de matière renforcée en fibres de carbone, et des couches intermédiaires (2) de matière d'amortissement des vibrations ;
comprenant les étapes suivantes :
la préparation d'un mandrin (4) qui possède un axe ;
l'enroulement d'une bande renforcée en fibres de carbone (1) imprégnée avec une résine à phase dispersée autour dudit mandrin pour former une couche en matière composite renforcée en fibres de carbone (1) ;
caractérisé par les étapes suivantes :
la couverture d'une bande d'amortissement des vibrations, formée par une résine époxy non cuite ou mi-cuite et incluant un agent assouplissant en son sein sur ladite couche en matière composite renforcée en fibres de carbone (1) pour former une couche d'amortissement des vibrations (2) ;
la répétition, en alternance, de l'étape d'enroulement de bande renforcée en fibres de carbone et de l'étape de couverture de bande d'amortissement des vibrations pour former une multicouche composée d'une pluralité de couches en matière composite renforcée de fibres de carbone et d'une pluralité de couches d'amortissement des vibrations ;
le pressage et le chauffage de ladite multicouche pour obtenir une multicouche durcie ; et
l'enlèvement de ladite multicouche durcie dudit mandrin pour former ledit tube de poussée.

10. Procédé selon la revendication 9, caractérisé par :
la formation de deux couches adjacentes desdites couches en matière composite en enroulant ladite bande de sorte qu'une couche sélectionnée des deux couches adjacentes des couches en matière composite ait ledit angle d'orientation de fibre prédéterminé particulier par rapport audit axe de tube tandis que la couche restante des deux couches adjacentes des couches en matière composite a un autre dit angle d'orientation de fibre prédéterminé sélectionné différent de l'angle d'orientation de fibre prédéterminé sélectionné particulier.

11. Procédé selon la revendication 9 ou 10, caractérisé par l'étape suivante :
la formation de chacune desdites couches en matière composite par une feuille préimprégnée de la matière renforcée en fibres de carbone imprégnée avec ladite résine à phase dispersée.

12. Procédé selon la revendication 9, 10, ou 11, caractérisé en ce que :
ladite résine à phase dispersée est une résine synthétique étant soit une résine thermoplastique et/ou une résine époxy ou les deux, comprenant une combinaison d'une résine polyvalente et d'un durcisseur.

13. Procédé selon l'une quelconque des revendications 9 à 12, caractérisé en ce que la couche d'amortissement des vibrations (2) est formée par une résine époxy non cuite, mi-cuite ou cuite à 135 °C en incluant un agent assouplissant.
